# EUROPÄISCHE PATENTSCHRIFT

(11) **EP 1 002 937 B1**
(45) Veröffentlichungstag und Bekanntmachung des Hinweises auf die Patenterteilung: **24.03.2004**
(21) Anmeldenummer: 99121042.8
(22) Anmeldetag: 21.10.1999
(51) Int. Cl.: F01L 1/26, F01L 1/053, F01L 1/18, F01L 1/24, F02F 1/24, F02F 1/42

(54) **Hubkolben-Brennkraftmaschine mit einem Dreiventil-Zylinderkopf**
Piston engine with a three valve cylinder head
Moteur à pistons avec une culasse à 3 soupapes

(30) Priorität: 19.11.1998 DE 19853412
(43) Veröffentlichungstag der Anmeldung: 24.05.2000
(73) Patentinhaber: Bayerische Motoren Werke Aktiengesellschaft, 80809 München (DE)
(72) Erfinder: Wimmer, Rudolf, 4431 Haidershofen (AT); Nefischer, Peter, Dr., 4320 Perg (AT)

(56) Entgegenhaltungen:
- EP-A- 0 209 426
- DE-A- 3 741 923
- DE-A- 4 018 065
- US-A- 5 307 784
- PATENT ABSTRACTS OF JAPAN vol. 010, no. 381 (M-547), 19. Dezember 1986 (1986-12-19) & JP 61 171826 A (NISSAN MOTOR CO LTD), 2. August 1986 (1986-08-02)

## Beschreibung

Die Erfindung bezieht sich nach dem Oberbegriff des Patentanspruches 1 auf eine Hubkolben-Brennkraftmaschine mit einem Dreiventil-Zylinderkopf, bei dem ein erstes Einlaßventil und ein einziges Auslaßventil für gesonderte Ein- und Auslaß-Kanäle im wesentlichen in einer ersten Brennraumhälfte eines Zylinders in Zylinderkopfslängsrichtung fluchtend angeordnet sind, und ein für einen zweiten Einlaßkanal vorgesehenes zweites Einlaßventil in der zweiten Brennraumhälfte des Zylinders angeordnet ist, wobei zwischen den Einlaßventilen drallerzeugender Einlaßkanäle und dem Auslaßventil brennraumseitig eine im Zylinderkopf angeordnete Betriebseinrichtung (Einspritzdüse; Zündkerze) mündet.

Ein derartiger Dreiventil-Zylinderkopf ist für einen direkt einspritzenden Dieselmotor beispielsweise aus der deutschen Patentschrift DE 39 03 831 C2 bekannt. Eine Steuerung der je Zylinder vorgesehenen drei Ventile ist in diesem Dokument nicht dargestellt.

Ein weiterer Dreiventil-Zylinderkopf mit einer brennraummittig zwischen den drei Ventilen angeordneten Zündkerze ist beispielsweise aus dem amerikanischen Patent US 5,638,787 bekannt, wobei auch in diesem Dokument Angaben zur Ventilsteuerung fehlen.

Schließlich ist aus der deutschen Offenlegungsschrift DE 33 42 115 A1 ein Dreiventil-Zylinderkopf für eine gemischverdichtende, fremdgezündete Brennkraftmaschine bekannt, wobei der nach dem Querstrom-Prinzip gestaltete Zylinderkopf mit einem Ventiltrieb ausgerüstet ist, bei dem eine zwischen den Ventilen in Zylinderkopflängsmittenebene angeordnete Nockenwelle über Kipphebel jedes der drei Ventile eines Zylinders steuert. Wie den Darstellungen dieses Dreiventil-Zylinderkopfes weiter zu entnehmen ist, ist die jeweilige Zündkerze außermittig neben dem einzigen Auslaßventil und gegenüber einem von zwei Einlaßventilen in den Brennraum vorstehend angeordnet. Diese außermittige Anordnung der Zündkerze bzw. der Betriebseinrichtung in Relation zur einströmenden Ladung ist für eine optimale Verbrennung ungünstig.

Auch die Dokumente EP 0 209 426 und DE 3 741 923 offenbaren Dreiventil- Zylinderkopfe.

Der Erfindung liegt die Aufgabe zugrunde, für einen Dreiventil-Zylinderkopf mit brennraummittig und im wesentlichen zur Zylinderachse parallel im Zylinderkopf angeordneter Betriebseinrichtung eine im Aufbau einfache Ventilsteuerung mit einer Nockenwelle aufzuzeigen.

Diese Aufgabe ist mit dem Patentanspruch 1 gelöst und zwar dadurch, daß die Betriebseinrichtung im wesentlichen brennraummittig und zur Zylinderachse parallel im Zylinderkopf angeordnet ist und daß die drei Ventile über eine seitlich der Betriebseinrichtung im Bereich über der zweiten Brennraumhälfte im Zylinderkopf angeordneten Nockenwelle unter Zwischenschaltung von Übertragungselementen hubgesteuert sind, wobei die in der ersten Brennraumhälfte miteinander fluchtenden Ventile für den einen Einlaßkanal und den einzigen Auslaßkanal über Kipphebel hubgesteuert sind und das zweite Einlaßventil über einen Tassenstößel oder einen Schlepphebel hubbetätigt ist.

Mit der erfindungsgemäß gestalteten Ventilsteuerung ergibt sich in vorteilhafter Weise eine zentrale Lage der jeweiligen Betriebseinrichtung - Einspritzdüse; Zündkerze - für eine vorteilhaft schadstoffarme Verbrennung.

Vorteilhafte Ausgestaltungen der Erfindung sind in Unteransprüchen angegeben. So ist mit einer ersten Ausgestaltung der Erfindung eine vom Zylinderkopf unabhängig ausgebildete Lageranordnung der Nockenwelle aufgezeigt, die es desweiteren ermöglicht, die drei Ventile mit unterschiedlichen Übertragungselementen zu betätigen, wobei diese Übertragungselemente in der Lageranordnung integriert sind. Vorzugsweise sind zwei Kipphebel für ein Einlaßventil und das Auslaßventil vorgesehen, wobei das zweite Einlaßventil in bauraumsparender Weise über einen Tassenstößel betätigt ist. Ist dieser Tassenstößel gemäß einem weiteren Ausbildungsmerkmal als hubabschaltbare Schalttasse vorgesehen, so ergibt sich damit in vorteilhafter Weise die Möglichkeit zur Ventilabschaltung in bestimmten Kennfeldbereichen der Brennkraftmaschine, was zur Intensivierung der Luftbewegung im Brennraum genutzt werden kann und in vorteilhafter Weise weiter zur Senkung von Abgasemissionen beiträgt.

Die weitere erfindungsgemäße Ausgestaltung der vorbeschriebenen Lageranordnung ermöglicht es in vorteilhafter Weise, den Zylinderkopf in niedriger Bauweise als Querstrom-Zylinderkopf auszubilden, womit einerseits eine vorteilhafte Gasdynamik ein- und auslaßseitig erzielbar ist und andererseits die hierfür notwendigen Einrichtungen auf beide Seiten der Brennkraftmaschine verteilt anzuordnen sind. Die erfindungsgemäß gestaltete Ventilsteuerung ist in Verbindung mit einer Einspritzdüse als Betriebseinrichtung sowohl für einen Dieselmotor als auch für einen Otto-Motor geeignet, wobei die zur besseren Gemischaufbereitung drallerzeugenden Einlaßkanäle zur vereinfachten Guß-Ausgestaltung des Zylinderkopfes als Tangentialkanäle gestaltet sind.

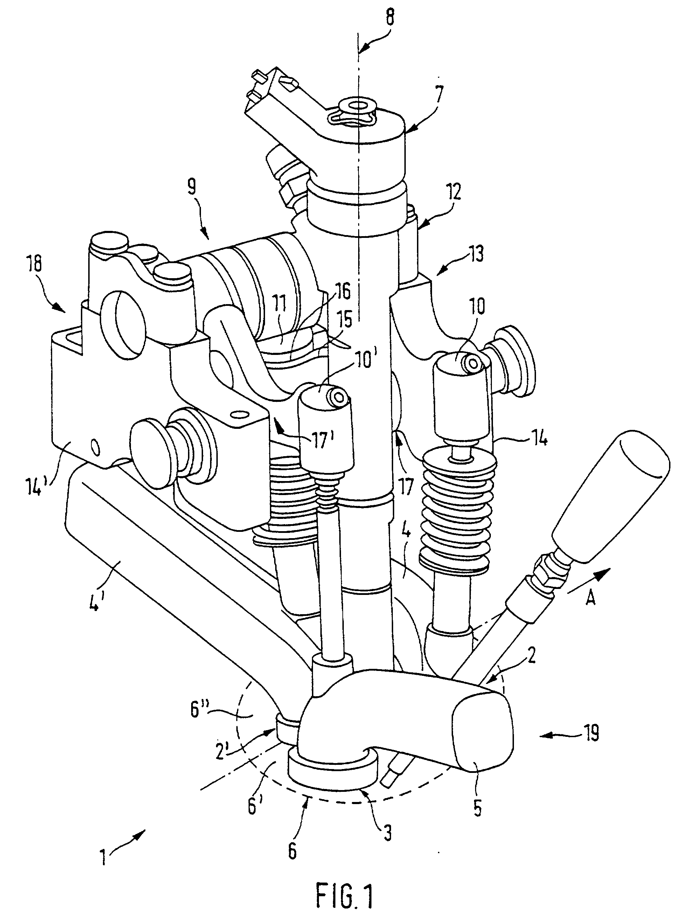

Die Erfindung ist anhand eines in der Zeichnung dargestellten Beispiels beschrieben. Es zeigt
- Figur 1: in perspektivischer Darstellung eine Gesamtansicht der Ventilsteuerung für drei Gaswechselkanäle eines Brennraumes,

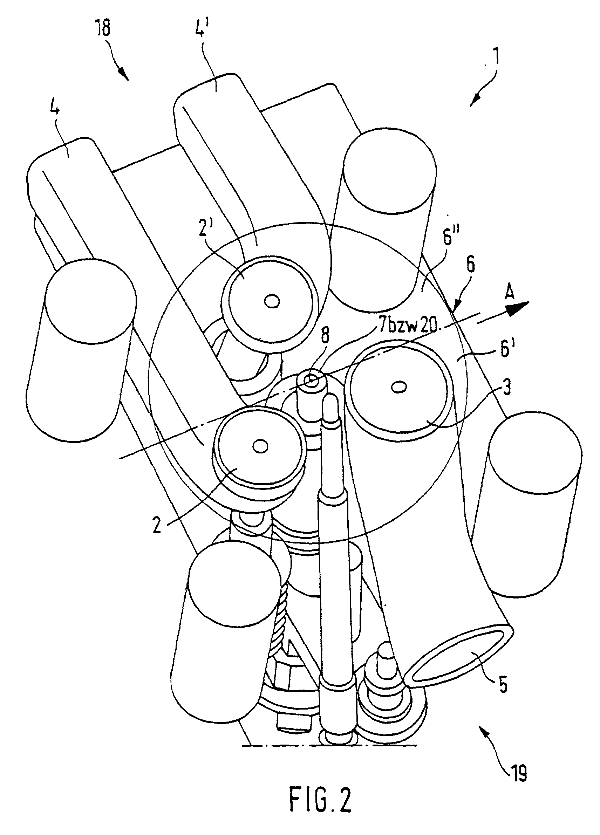

- Figur 2: die Lage der drei Ventile sowie einer Einspritzdüse in einem Brennraum eines Zylinders,

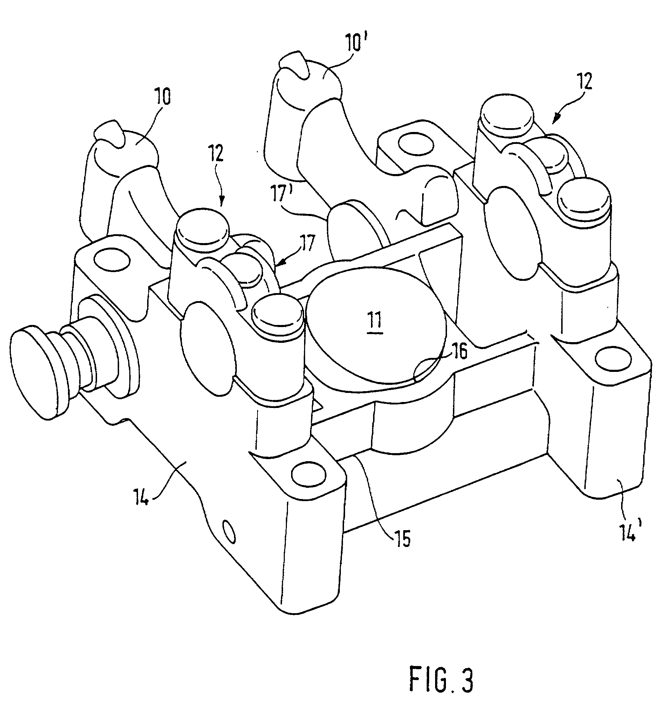

- Figur 3: einen Lagerrahmen der Nockenwellen-Lagerung mit zwei Kipphebeln und einem Tassenstößel als Betätigungselemente für die drei Ventile.

Eine nicht dargestellte Hubkolben-Brennkraftmaschine ist mit einem Dreiventil-Zylinderkopf 1 ausgerüstet, bei dem ein erstes Einlaßventil 2 und ein einziges Auslaßventil 3 für gesonderte Ein- und Auslaß-Kanäle 4 bzw. 5 im wesentlichen in einer ersten Brennraumhälfte 6' eines Zylinders 6 in Zylinderkopflängsrichtung gemäß Pfeil A fluchtend angeordnet sind. Weiter ist ein für einen zweiten Einlaßkanal 4' vorgesehenes zweites Einlaßventil 2' in der zweiten Brennraumhälfte 6" des Zylinders 6 angeordnet. Schließlich mündet zwischen den Einlaßventilen 2 und 2' drallerzeugender Einlaßkanäle 4, 4' und dem Auslaßventil 3 brennraumseitig eine im Zylinderkopf 1 angeordnete Betriebseinrichtung 7, wie beispielsweise eine Einspritzdüse oder eine Zündkerze.

Erfindungsgemäß ist die Betriebseinrichtung 7 im wesentlichen brennraummittig und zur Zylinderachse 8 des Zylinders 6 parallel im Zylinderkopf 1 angeordnet, wobei die drei Ventile 2, 2'; 3 über eine seitlich der Betriebseinrichtung 7 im Bereich über der zweiten Brennraumhälfte 6" im Zylinderkopf 1 angeordneten Nockenwelle 9 unter Zwischenschaltung von Übertragungselementen 10, 10'; 11 hubgesteuert sind. Zur Erzielung einer einfachen Ventilsteuerung sind ferner die in der ersten Brennraumhälfte 6' miteinander fluchtenden Ventile 2 und 3 für den einen Einlaßkanal 4 und den einzigen Auslaßkanal 5 über Kipphebel 10, 10' hubgesteuert, wogegen das zweite Einlaßventil 2' zur Erzielung einer bauraumsparenden Anordnung über einen Tassenstößel 11 hubbetätigt ist.

In Ausgestaltung der Erfindung ist die Nockenwelle 9 in einem mit geteilten Lagern 12 ausgebildeten und gesondert im Zylinderkopf 1 anordbaren Lagerrahmen 13 gelagert, wobei die beabstandeten Lagerstühle 14 und 14' über eine Traverse 15 mit einer Durchbrechung 16 zur geführten Aufnahme des Tassenstößels 11 in einstückiger Verbindung stehen und zur weiteren Erzielung eines einfachen Aufbaues die Lagerstühle 14, 14' ferner betriebseinrichtungsseitig mit Lagerbolzen 17, 17' für die Kipphebel 10, 10' ausgerüstet sind.

Die für die erfindungsgemäße Ventilsteuerung gewählte Kombination zweier Kipphebel 10, 10' mit einem Tassenstößel 11 ergibt neben einem kompakten Aufbau der Ventilsteuerung mit der Auswahl des Tassenstößels 11 als hubabschaltbare Schalttasse den weiteren Vorteil, im Teillastbetrieb der nicht dargestellten Hubkolben-Brennkraftmaschine kennfeldgesteuert die Drallströmung im Zylinder 6 durch Abschalten des Einlaßkanals 4' vorteilhaft zu beeinflussen.

Die erfindungsgemäße Ventilsteuerung ergibt in weiterer Ausgestaltung den Vorteil, daß die beiden Einlaßventile 2 und 2' je Zylinder 6 von einer gemeinsamen Längsseite 18 des Zylinderkopfes 1 ausgehende Einlaßkanäle 4 und 4' unterschiedlicher Länge steuern, wobei dem in der zweiten Brennraumhälfte 6" mündenden, kürzeren Einlaßkanal 4' der aus der ersten Brennraumhälfte 6' abgehende Auslaßkanal 5 etwa diametral im Zylinderkopf 1 in dessen gegenüberliegender Längsseite 19 mündend zugeordnet ist. Mit dieser vorbeschriebenen Kanalanordnung ist ein vorteilhaft niedrig bauender Querstrom-Zylinderkopf in Dreiventil-Ausführung erzielt.

Als bevorzugte Betriebseinrichtung 7 ist eine Kraftstoffeinspritzdüse 20 vorgesehen, wobei sowohl für einen Dieselmotor als auch für einen Otto-Motor die drallerzeugenden Einlaßkanäle 4 und 4' zur einfacheren Gußausgestaltung des Zylinderkopfes 1 als Tangentialkanäle gestaltet sind.

Anstelle des Tassenstößels 11 kann auch ein im Lagerrahmen 13 abgestützer Schlepphebel (nicht gezeigt) vorgesehen sein.

## Patentansprüche

1. Hubkolben-Brennkraftmaschine mit einem Dreiventil-Zylinderkopf,
- bei dem ein erstes Einlaßventil (2) und ein einziges Auslaßventil (3) für gesonderte Ein- und Auslaß-Kanäle (4, 5) im wesentlichen in einer ersten Brennraumhälfte (6') eines Zylinders (6) in Zylinderkopflängsrichtung (Pfeil A) fluchtend angeordnet sind, und
- ein für einen zweiten Einlaßkanal (4') vorgesehenes zweites Einlaßventil (2') in der zweiten Brennraumhälfte (6") des Zylinders (6) angeordnet ist, wobei
- zwischen den Einlaßventilen (2, 2') drallerzeugender Einlaßkanäle (4, 4') und dem Auslaßventil (3) brennraumseitig eine im Zylinderkopf (1) angeordnete Betriebseinrichtung (7), d.h., eine Einspritzdüse oder eine Zündkerze, mündet,
**dadurch gekennzeichnet,**
- **daß** die Betriebseinrichtung (7) im wesentlichen brennraummittig und zur Zylinderachse (8) des Zylinders (6) parallel im Zylinderkopf (1) angeordnet ist, und
- **daß** die drei Ventile (2, 2'; 3) über eine seitlich der Betriebseinrichtung (7) im Bereich über der zweiten Brennraumhälfte (6") im Zylinderkopf (1) angeordneten Nockenwelle (9) unter Zwischenschaltung von Übertragungselementen (10, 10'; 11) hubgesteuert sind, wobei
- die in der ersten Brennraumhälfte (6') miteinander fluchtenden Ventile (2, 3) für den einen Einiaßkanal (4) und den einzigen Auslaßkanal (5) über Kipphebel (10, 10') hubgesteuert sind, und
- das zweite Einlaßventil (2') über einen Tassenstößel (11) oder einen Schlepphebel hubbetätigt ist.

2. Brennkraftmaschine nach Anspruch 1, **dadurch gekennzeichnet,**
- **daß** die Nockenwelle (9) in einem mit geteilten Lagern (12) ausgebildeten und gesondert im Zylinderkopf (1) anordbaren Lagerrahmen (13) gelagert ist, wobei
- die Lagerstühle (14, 14') über eine Traverse (15) mit einer Durchbrechung (16) zur geführten Aufnahme des Tassenstößels (11) in einstückiger Verbindung stehen, und ferner
- die Lagerstühle (14, 14') betriebseinrichtungsseitig mit Lagerbolzen (17, 17') für die Kipphebel (10, 10') ausgerüstet sind.

3. Brennkraftmaschine nach Anspruch 2, **dadurch gekennzeichnet, daß** als Tassenstößel (11) eine hubabschaltbare Schalttasse vorgesehen ist.

4. Brennkraftmaschine nach den Ansprüchen 1 bis 3, **dadurch gekennzeichnet,**
- **daß** die beiden Einlaßventile (2, 2') je Zylinder (6) von einer gemeinsamen Längsseite (18) des Zylinderkopfes (1) ausgehende Einlaßkanäle (4, 4') unterschiedlicher Länge steuern, wobei
- dem in der zweiten Brennraumhälfte (6') mündenden, kürzeren Einlaßkanal (4') der aus der ersten Brennraumhälfte (6') abgehende Auslaßkanal (5) etwa diametral im Zylinderkopf (1) in dessen gegenüberliegender Längsseite (19) mündend zugeordnet ist.

5. Brennkraftmaschine nach den Ansprüchen 1 bis 4, **dadurch gekennzeichnet, daß** die Betriebseinrichtung (7) eine Einspritzdüse (20) ist, insbesondere für einen Dieselmotor.

6. Brennkraftmaschine nach den Ansprüchen 1 bis 5, **dadurch gekennzeichnet, daß** die drallerzeugenden Einlaßkanäle (4, 4') als Tangentialkanäle gestaltet sind.

## Claims

1. A reciprocating internal combustion engine with a three-valve cylinder head,
- wherein a first inlet valve (2) and a single outlet valve (3) for separate inlet and outlet ports (4, 5) are disposed in line in the longitudinal direction of the cylinder head (arrow A) substantially in a first combustion-chamber half (6') of a cylinder (6), and
- a second inlet valve (2') provided for a second inlet port (4') is disposed in the second combustion-chamber half (6") of the cylinder (6) wherein
- an operating device (7), that is an injection nozzle or a spark plug, opens in the cylinder head (1) on the combustion-chamber side between the outlet valve (3) and the inlet valves (2, 2') of swirl-producing inlet ports (4, 4'),
**characterised in that**
- the operating device (7) is disposed in the cylinder head (1) substantially in the middle of the combustion chamber and parallel to the cylinder axis (8) of the cylinder (6), and
- the three valves (2, 2'; 3) are controlled by the stroke, with interposition of transmission elements (10, 10'; 11), by a camshaft (9) disposed at the side of the operating device (7) in the cylinder head (1) in the region above the second combustion-chamber half (6"), wherein
- the valves (2, 3) aligned with one another in the first combustion-chamber half (6'), for the first inlet port (4) and the single outlet port (5) are controlled by the stroke via rocking levers (10, 10') and
- the second inlet valve (2') is actuated by the stroke via a cup push-rod (11) or a drag lever.

2. An engine according to claim 1, **characterised in that**
- the camshaft (9) is mounted in a bearing frame (13) formed with divided bearings (12) and separately disposable in the cylinder head (1), wherein
- the bearing blocks (14, 14') are connected in one piece via a crossmember (15) formed with an aperture (16) for controlled reception of the cup push rod (11), and
- the bearing blocks (14, 14') are equipped with bolts (17, 17') for the rocker arms (10, 10') on the same side as the operating device.

3. An engine according to claim 2, **characterised in that** the cup push-rod (11) can be disconnected by the stroke.

4. An engine according to claims 1 to 3, **characterised in that**
- the two inlet valves (2, 2') per cylinder (6) control inlet ports (4, 4') of different lengths extending from a common longitudinal side (18) of the cylinder head (1), wherein
- the outlet port (5) extending from the first combustion-chamber half (6') is associated with the shorter inlet port (4') opening into the second combustion-chamber half (6') and opens diametrically in the cylinder head (1) into the opposite longitudinal side (19) thereof.

5. An engine according to claims 1 to 4, **characterised in that** the operating device (7) is an injection nozzle (20), especially for a diesel engine.

6. An engine according to claims 1 to 5, **characterised in that** the swirl-producing inlet ports (4, 4') are tangential.

## Revendications

1. Moteur à pistons avec une culasse à trois soupapes, dont :
- une première soupape d'admission (2) et une soupape d'échappement unique (3) pour des canaux d'admission et d'échappement séparés (4, 5) sont placées en alignement précis dans le sens de la longueur de la culasse (flèche A) essentiellement dans une première moitié de la chambre de combustion (6') d'un cylindre (6) et
- une deuxième soupape d'admission (2') prévue pour un deuxième canal d'admission (4') est placée dans la deuxième moitié de la chambre de combustion (6") du cylindre (6),
- un dispositif de commande (7), à savoir un pulvérisateur ou une bougie d'allumage, placé dans la culasse (1) confluant alors côté chambre de combustion entre les soupapes d'admission (2, 2') des canaux d'admission de mise en rotation (4, 4') et la soupape d'échappement (3),
**caractérisé en ce que**
- le dispositif de commande (7) est placé, dans la culasse (1), essentiellement au centre de la chambre de combustion et parallèlement à l'axe (8) du cylindre (6) et
- les trois soupapes (2, 2' et 3) sont soulevées à l'aide d'un arbre à cames (9) placé dans la culasse (1), à côté du dispositif de commande (7), dans la zone située au-dessus de la deuxième moitié de la chambre de combustion (6"), et en intercalant les organes de transmission (10, 10' et 11),
- les soupapes (2, 3) placées en alignement précis l'une par rapport à l'autre dans la première moitié de la chambre de combustion (6') étant alors soulevées, à l'aide d'un culbuteur (10, 10'), pour l'un des canaux d'admission (4) et l'unique canal d'échappement (5) et
- la deuxième soupape d'admission (2') étant alors soulevée à l'aide d'un taquet à couronne (11) ou d'un culbuteur d'entraînement.

2. Moteur selon la revendication 1,
**caractérisé en ce que**
- l'arbre à cames (9) est contenu dans une zone de paliers (13) formée de paliers (12) séparés et pouvant être placée à part dans la culasse (1),
- les paliers de butée (14 et 14') étant reliés de manière compacte via une traverse (15) contenant une percée (16) afin de loger de manière dirigée le taquet à couronne (11), et
- les paliers de butée (14 et 14') étant ensuite équipés, du côté du dispositif de commande, de goujons de palier (17, 17') pour les culbuteurs (10, 10').

3. Moteur selon la revendication 2,
**caractérisé en ce qu'**
une couronne de distribution pouvant être mise hors service par levée est prévue comme taquet à couronne (11).

4. Moteur selon les revendications 1 à 3,
**caractérisé en ce que**
- les deux soupapes d'admission (2 et 2') de chaque cylindre (6) commandent les canaux d'admission (4 et 4') de longueur différente sortant d'un grand côté commun (18) de la culasse (1),
- le canal d'échappement (5) sortant de la première moitié de la chambre de combustion (6') étant alors affecté de manière confluante au canal d'admission (4') plus court confluant dans la deuxième moitié de la chambre de combustion (6') de manière à peu près diamétrale au niveau de la culasse (1), dans son grand côté opposé (19).

5. Moteur selon les revendications 1 à 4,
**caractérisé en ce que**
le dispositif de commande (7) est un pulvérisateur (20), en particulier pour un moteur diesel.

6. Moteur selon les revendications 1 à 5,
**caractérisé en ce que**
les canaux d'admission (4, 4') de mise en rotation prennent la forme de canaux tangentiels.
